## Europäisches Patentamt

## European Patent Office

## Office européen des brevets

(19)

(11) Veröffentlichungsnummer: **0 213 387**
**B1**

(12)

# EUROPÄISCHE PATENTSCHRIFT

(45) Veröffentlichungstag der Patentschrift:
**22.03.89**

(51) Int. Cl.⁴: **B60K 11/08, B62D 35/00**

(21) Anmeldenummer: **86110338.0**

(22) Anmeldetag: **26.07.86**

(54) **Kraftfahrzeug mit einer aufbauseitig angeordneten Luftführungsvorrichtung.**

(30) Priorität: **27.08.85 DE 3530494**

(43) Veröffentlichungstag der Anmeldung:
**11.03.87 Patentblatt 87/11**

(45) Bekanntmachung des Hinweises auf die Patenterteilung:
**22.03.89 Patentblatt 89/12**

(84) Benannte Vertragsstaaten:
**DE FR GB IT**

(56) Entgegenhaltungen:
**CH-A- 175 839**
**DE-C- 890 462**
**FR-A- 2 041 369**
**JP-A-59 184 067**

(73) Patentinhaber: **Dr.Ing.h.c. F. Porsche Aktiengesellschaft, Porschestrasse 42, D-7000 Stuttgart 40(DE)**

(72) Erfinder: **Hochkönig, Manfred, Dipl.-Ing. FH, Rechbergstrasse 2, D-7141 Möglingen(DE)**
Erfinder: **Kretschmer, Helmut, Dipl.-Ing. FH, Blumstrasse 41, D-8751 Bessenbach 2(DE)**

**Beschreibung**

Die Erfindung bezieht sich auf ein Kraftfahrzeug mit einer aufbauseitig angeordneten Luftführungsvorrichtung für einen ersten Luftstrom, der über eine vor oder hinter den Rädern angebrachte Eintrittsöffnung in die Luftführungsvorrichtung gelangt und diese über eine an der Wagenunterseite vorgesehene Austrittsöffnung verläßt, wobei der erste Luftstrom mit einem zwischen der Wagenunterseite und der Fahrbahn hindurchströmenden zweiten Luftstrom zusammengeführt wird.

Bei einem bekannten Kraftfahrzeug der eingangs genannten Gattung (DE-PS 890 462) ist die Austrittsöffnung des ersten Luftstromes in Fahrzeuglängsrichtung gesehen, etwa im Bereich der Vorderachsebene angeordnet, und zwar benachbart einer Fahrzeuglängsmittelebene. Dieser Anordnung haftet der Nachteil an, daß zumindest ein Teilstrom des von vorne in den Bereich zwischen Fahrbahn und Verkleidungsteil einfließenden zweiten Luftstromes direkt auf die Räder strömt, wodurch starke, den Luftwiderstandsbeiwert erhöhende Verwirbelungen auftreten.

Aus der DE-PS 710 241 ist es bekannt, bei einem Fahrzeug vor den Rädern Verdrängungskörper anzuordnen, die die anströmende Luft an den Rädern vorbeileiten. Nachteilig an dieser Anordnung ist, daß die Verdrängungskörper wegen der für die gute Funktion des Fahrzeuges erforderlichen Bodenfreiheit bzw. wegen des Böschungswinkels nicht so ausgebildet werden können, wie dies zu einer spürbaren Verbesserung des Luftwiderstandsbeiwertes erforderlich wäre. Denn die Verdrängungskörper sind um so wirkungsvoller, je geringer der Abstand zwischen den Verdrängungskörpern und der Fahrbahn ist. Außerdem ist zur Herstellung und Montage der Verdrängungskörper ein zusätzlicher Aufwand nötig.

Aufgabe der Erfindung ist es, an einem Fahrzeug solche Vorkehrungen zu treffen, daß bei Einhaltung der vorgegebenen Bodenfreiheit die Räder des Fahrzeuges wirkungsvoll umströmt werden.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Lage der Austrittsöffnungen des ersten Luftstromes unmittelbar vor und ausschließlich im Bereich der Räder sowie durch die Verzögerung der Strömungsgeschwindigkeit des ersten Luftstromes vor der Austrittsöffnung ein wirkungsvolles Umströmen der Räder und somit eine Reduzierung des Luftwiderstandsbeiwertes erfolgt. Dies wird dadurch erreicht, daß der erste, die Austrittsöffnungen passierende Luftstrom eine geringere kinetische Energie aufweist als der zweite Luftstrom. Jedoch liegt beim ersten Luftstrom ein höheres Druckniveau vor als beim zweiten Luftstrom, d.h., der erste Luftstrom bildet ein leitkörperartiges Polster. Die bisher üblichen Verdrängungskörper entfallen.

Ein weiterer Vorteil der erfindungsgemäßen Anordnung besteht darin, daß der erste Luftstrom aufgrund der bei den meisten Fahrzeugen üblichen Kühlerdurchströmung bereits vorhanden ist.

Ein Ausführungsbeispiel der Erfindung ist in der Zeichnung dargestellt und wird im folgenden näher erläutert.

Es zeigt

Fig. 1 eine Seitenansicht eines Personenwagens,

Fig. 2 eine Teilseitenansicht dieses Personenwagens, teilweise im Schnitt,

Fig. 3 einen Schnitt nach der Linie III–III der Fig. 2 in größerem Maßstab,

Fig. 4 einen Schnitt entsprechend Fig. 3, jedoch mit in Fahrzeuglängsrichtung ausgerichteten Kühlern,

Fig. 5 einen Schnitt nach der Linie V–V der Fig. 4,

Fig. 6 einen Schnitt nach der Linie VI–VI der Fig. 3.

Das durch einen Personenwagen dargestellte Kraftfahrzeug 1 besitzt einen Aufbau 2 und Räder 3. Innerhalb des Aufbaus 2 ist eine Luftführungsvorrichtung 4 für einen ersten Luftstrom A angeordnet. Dieser gelangt über eine Eintrittsöffnung 5 in die Luftführungsvorrichtung 4, durchströmt diese und wird zu einer, an einer Wagenunterseite 6 vorgesehenen Austrittsöffnung 7 geleitet. Danach wird der erste Luftstrom A mit einem zwischen der Wagenunterseite 6 und einer Fahrbahn 8 hindurchströmenden zweiten Luftstrom B zusammengeführt.

Damit der zweite Luftstrom B verwirbelungsarm zwischen Wagenunterseite 6 und Fahrbahn 8 hindurchströmen kann, ist die Wagenunterseite 6 mit einem aerodynamisch ausgebildeten, glattflächigen Verkleidungsteil 9 versehen. Vorzugsweise erstreckt sich das Verkleidungsteil 9 über die ganze Fahrzeuglänge. Es besteht aber auch die Möglichkeit, das Verkleidungsteil 9 in Fahrtrichtung C gesehen, lediglich vor einer Vorderachsebene D–D anzuordnen. Das Verkleidungsteil 9 wird durch eine Unterbodenverkleidung, eine Bugschürze oder dergleichen gebildet.

Zur Vermeidung einer direkten Anströmung der Räder 2 durch den zweiten Luftstrom B sind erfindungsgemäß die am Verkleidungsteil 9 angeordneten Austrittsöffnungen 7 für den ersten Luftstrom A unmittelbar vor und ausschließlich im Bereich der Räder 3 vorgesehen. Innerhalb der Luftführungsvorrichtung 4 ist eine Einrichtung 10 zur Verringerung der Strömungsgeschwindigkeit des ersten Luftstromes A angeordnet, so daß der erste Luftstrom A nach der Austrittsöffnung 7 eine geringere kinetische Energie aufweist als der zwischen Wagenunterseite 6 und Fahrbahn 8 hindurchtretende zweite Luftstrom B. Jedoch liegt beim ersten Luftstrom A ein höheres Druckniveau vor als beim zweiten Luftstrom B, d.h., der erste Luftstrom A bildet vor den Rädern 3 ein leitkörperartiges Polster, um das der zweite Luftstrom B seitlich vorbeigeleitet wird.

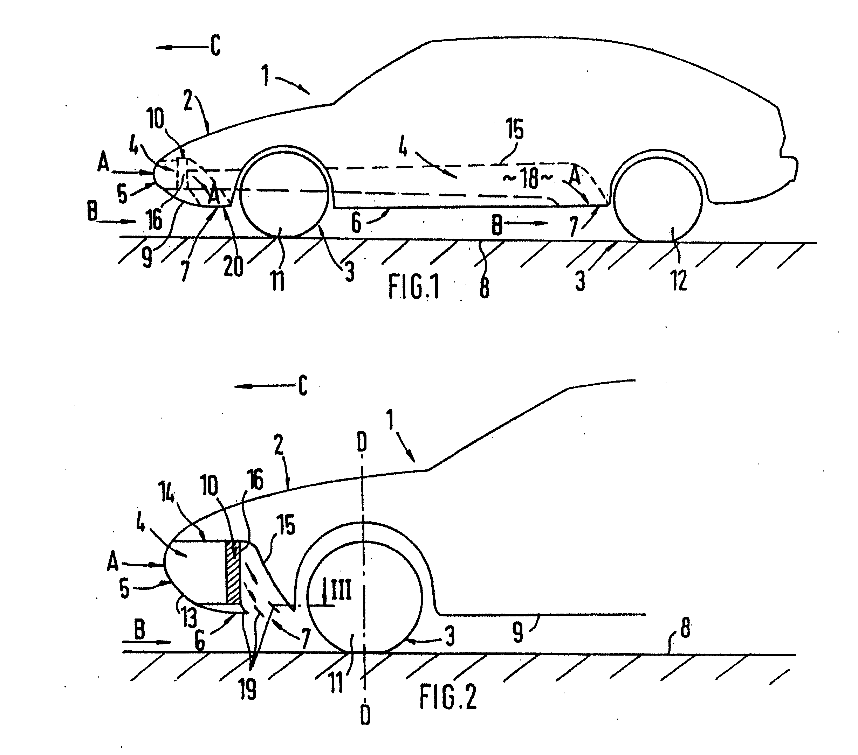

Gemäß Fig. 1 ist vor jedem Rad 3 des Personenwagens eine Austrittsöffnung 7 vorgesehen, also vor beiden Vorderrädern 11 und den Hinterrädern 12. In Fig. 2 hingegen sind lediglich vor den beiden Vorderrädern 11 Austrittsöffnungen 7 angebracht.

Jede Austrittsöffnung 7 weist benachbart dem angrenzenden Rad 3 eine größere Breite auf als in einem in Fahrtrichtung C gesehen, weiter vorneliegenden Bereich.

Die größte Breite E der Austrittsöffnung 7 soll etwa der Breite F des Rades 3 entsprechen. Eine gute Umströmung der Räder 3 wird beispielsweise dadurch erzielt, daß die Austrittsöffnung 7 in der Draufsicht gesehen, annähernd dreieckförmig ausgebildet ist, dergestalt, daß die Breite der Austrittsöffnung 7 entgegen der Fahrtrichtung C gesehen, kontinuierlich größer wird. Die Austrittsöffnung 7 kann auch halbkreisförmig, ellipsenförmig, trapezförmig oder dergleichen ausgebildet sein.

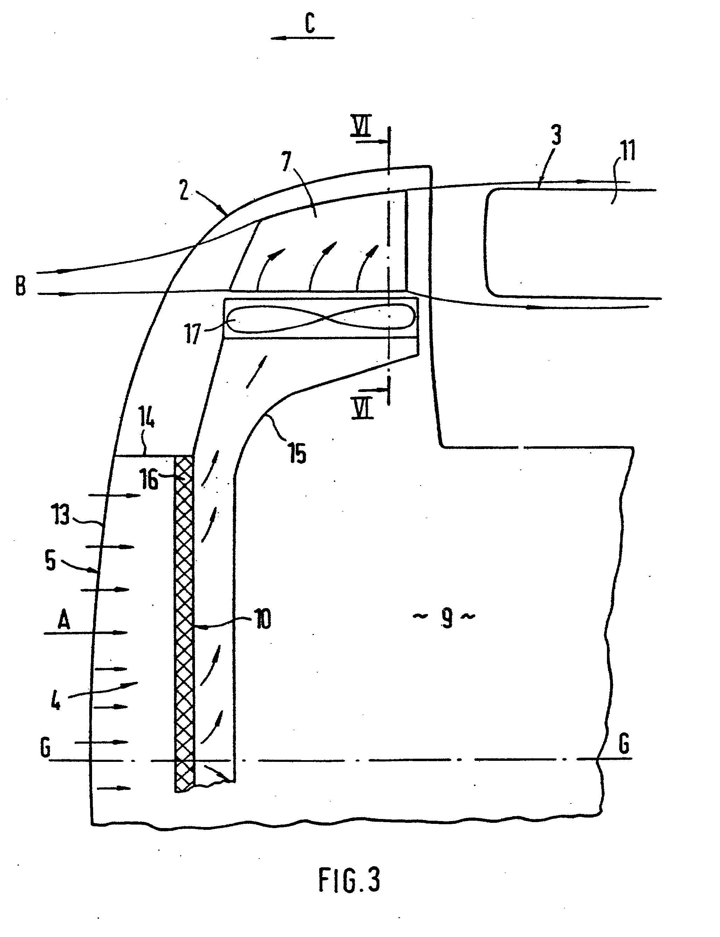

Die Eintrittsöffnung 5 ist entsprechend den Fig. 1 bis 4 an einem Bugendteil 13 des Aufbaus 2 angeordnet, und zwar in einem Bereich relativ hohen Staudrucks, so daß bei kleiner Dimensionierung der Eintrittsöffnung 5 stets eine ausreichende Menge an Luft in die Luftführungsvorrichtung 4 gelangt. Die Luftführungsvorrichtung 4 erstreckt sich zwischen der Eintrittsöffnung 5 und den jeweiligen Austrittsöffnungen 7 und wird durch aufbauseitige Kanäle 14, kanalförmige Montageteile 15 oder durch eine Kombination der beiden genannten Elemente 14, 15 gebildet. Jeder Austrittsöffnung 7 ist ein separater Kanal 14 bzw. ein kanalförmiges Montageteil 15 zugeordnet.

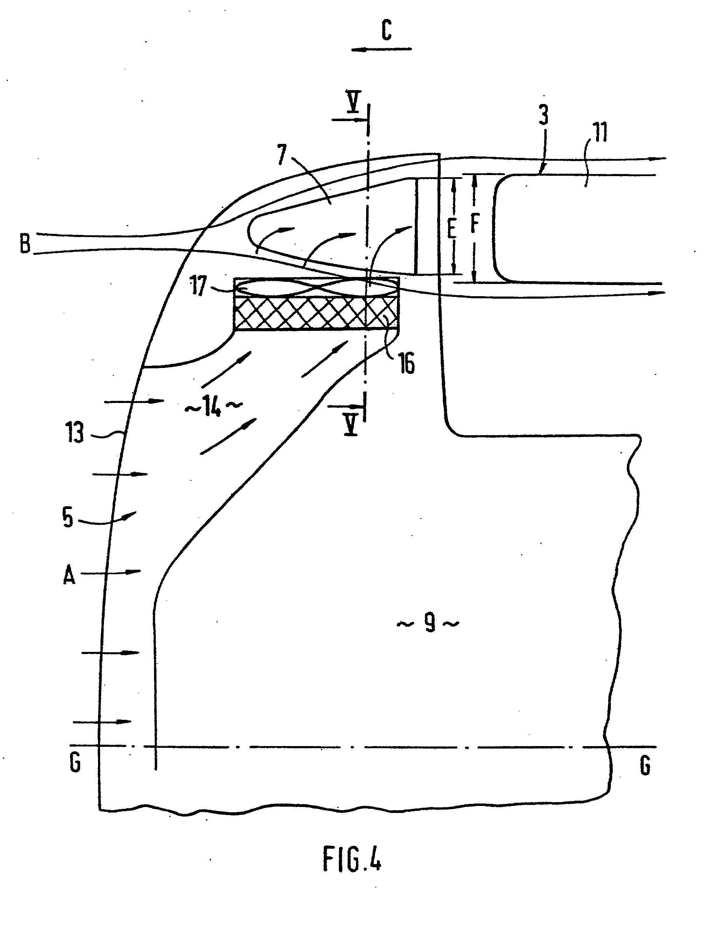

Nach den Fig. 1 bis 4 ist innerhalb der Luftführungsvorrichtung 4 ein Kühler 16 angeordnet, durch den der erste Luftstrom A hindurchgeführt wird. Dadurch wird eine Reduzierung der Strömungsgeschwindigkeit des ersten Luftstromes A erreicht. Der Kühler 16 dient beispielsweise zur Kühlung einer nicht dargestellten Brennkraftmaschine. Gemäß den Fig. 1 bis 3 ist der Kühler 16 quer zur Fahrzeuglängsrichtung eingebaut, wogegen in Fig. 4 zwei seitlich außenliegende. mit Abstand zu einer Fahrzeuglängsmittelebene G–G angeordnete Kühler 16 vorgesehen sind, die etwa parallel zu dieser Ebene verlaufen.

In den Fig. 2 bis 4 ist jeweils nach dem Kühler ein Gebläse 17 angeordnet, damit auch bei geringer Fahrgeschwindigkeit eine ausreichende Beaufschlagung des Kühlers 16 mit Kühlluft sichergestellt ist. Anstelle eines Kühlers 16 kann die Luftführungsvorrichtung 4 vor der Austrittsöffnung 7 auch eine Querschnittserweiterung 18 aufweisen, so daß auf diese Weise eine Verzögerung der Strömungsgeschwindigkeit erreicht wird.

Es besteht ferner die Möglichkeit, im Bereich der Austrittsöffnung 7 Leitelemente 19 anzuordnen, durch die der erste Luftstrom A frühzeitig in Strömungsrichtung des zweiten Luftstromes B umgelenkt wird. Eine Umströmung der Vorderräder 11, hervorgerufen durch den zweiten Luftstrom B, erfolgt aber auch dann, wenn keine Leitelemente 19 vorgesehen sind.

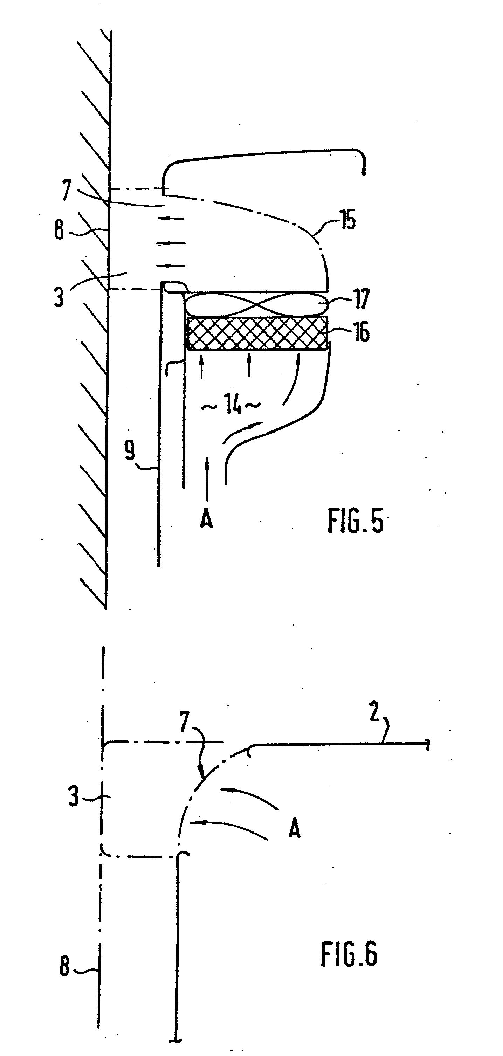

Wie Fig. 1 zeigt, weist das Verkleidungsteil 9 – in Fahrzeuglängsrichtung gesehen – im Bereich der Austrittsöffnung 7 einen etwa horizontal gerichteten Formverlauf 20 auf. In Fahrzeugquerrichtung gesehen, kann das Verkleidungsteil 9 im Bereich der Austrittsöffnung 7 entweder horizontal (Fig. 5) oder gerundet (Fig. 6) oder schrägverlaufend (nicht dargestellt) ausgebildet sein.

**Patentansprüche**

1. Kraftfahrzeug mit einer aufbauseitig angeordneten Luftführung für einen ersten Luftstrom (A), der über eine vor oder hinter den Rädern (11, 12) angebrachte Eintrittsöffnung (5) in die Luftführungsvorrichtung gelangt und diese über eine an einer Wagenunterseite (6) vorgesehene Austrittsöffnung (7) verläßt, wobei der erste Luftstrom (A) mit einem zweiten Luftstrom (B) zusammengeführt wird, der über einen gerundeten Bugbereich und eine nachfolgende glattflächige Wagenunterseite einströmt und zwischen Wagenunterseite und Fahrboden (8) hindurchströmt, dadurch gekennzeichnet, daß die an einem Verkleidungsteil (9) an der Wagenunterseite vorgesehenen Austrittsöffnungen (7) unmittelbar vor und ausschließlich im Bereich der Räder (11, 12) vorgesehen sind, wobei innerhalb der Luftführungsvorrichtung eine Einrichtung (10) zum Verzögern der Strömungsgeschwindigkeit des ersten Luftstromes (A) vorgesehen ist, so daß der erste Luftstrom im Bereich der Austrittsöffnung eine geringere kinetische Energie aufweist als der zwischen Wagenunterseite und Fahrbahn hindurchtretende zweite Luftstrom (B).

2. Kraftfahrzeug nach Anspruch 1, dadurch gekennzeichnet, daß die Austrittsöffnungen (7) lediglich vor den beiden Vorderrädern (11) angeordnet sind.

3. Kraftfahrzeug nach Anspruch 1, dadurch gekennzeichnet, daß die Austrittsöffnungen vor den Vorderrädern (11) und/oder den Hinterrädern (12) vorgesehen sind.

4. Kraftfahrzeug nach Anspruch 1, dadurch gekennzeichnet, daß jede Austrittsöffnung (7) benachbart dem Rad (13) eine größere Breite aufweist als in einem in Fahrtrichtung C gesehen, weiter vorne liegenden Bereich.

5. Kraftfahrzeug nach den Ansprüchen 1 bis 4, dadurch gekennzeichnet, daß die größte Breite (E) der Austrittsöffnung (7) etwa die Breite (F) des angrenzenden Rades (3) aufweist.

6. Kraftfahrzeug nach Anspruch 1, dadurch gekennzeichnet, daß das Verkleidungsteil (9) durch eine Unterbodenverkleidung, eine Bugschürze oder dergleichen gebildet wird.

7. Kraftfahrzeug nach Anspruch 6, dadurch gekennzeichnet, daß das Verkleidungsteil – in Fahrzeuglängsrichtung gesehen – im Bereich der Austrittsöffnung (7) einen etwa horizontal gerichteten Formverlauf (20) aufweist.

8. Kraftfahrzeug nach Anspruch 1, dadurch gekennzeichnet, daß die Einrichtung (10) durch einen Kühler (16) gebildet wird, durch den der erste Luftstrom (A) hindurchgeführt wird.

9. Kraftfahrzeug nach Anspruch 1, dadurch gekennzeichnet, daß die Einrichtung (10) durch eine vor der Austrittsöffnung (7) vorgesehene Querschnittserweiterung (18) der Luftführungsvorrichtung (4) gebildet wird.

10. Kraftfahrzeug nach Anspruch 1, dadurch gekennzeichnet, daß die Austrittsöffnung (7) – in der Draufsicht gesehen – etwa dreieckförmig ausgebildet ist.

**Revendications**

1. Véhicule automobile comportant un dispositif de guidage d'air situé du côté de la carrosserie pour un premier courant d'air (A) qui parvient dans le dispositif de guidage d'air par l'intermédiaire d'une ouverture d'entrée (5) située devant ou derrière les roues (11, 12) et le quitte par une ouverture de sortie (7) prévue sur un bas de caisse (6), le premier courant d'air (A) faisant jonction avec un second courant d'air (B) qui arrive par une zone antérieure arrondie et un bas de caisse à surface lisse lui faisant suite et passe entre le bas de caisse et la chaussée (8) caractérisé en ce que les ouvertures de sortie (7) prévues sur un élément de revêtement (9) du bas de caisse sont prévues juste devant et exclusivement dans la zone des roues (11, 12), un agencement (10) pour réduire la vitesse d'écoulement du premier courant d'air (A) étant prévu à l'intérieur du dispositif de guidage d'air, de sorte que le premier courant d'air (A) présente dans la zone de l'ouverture de sortie une plus faible énergie cinétique que le second courant d'air (B) passant entre le bas de caisse et la chaussée.

2. Véhicule selon la revendication 1, caractérisé en ce que les ouvertures de sortie (7) ne sont prévues que devant les deux roues avant (11).

3. Véhicule selon la revendication 1, caractérisé en ce que les ouvertures de sortie sont prévues devant les roues avant (11) et/ou les roues arrière (12).

4. Véhicule selon la revendication 1, caractérisé en ce que chaque ouverture de sortie (7) présente au voisinage de la roue une plus grande largeur que dans une zone située plus en avant dans le sens de déplacement (C) du véhicule.

5. Véhicule selon les revendications 1 à 4, caractérisé en ce que la plus forte largeur (E) de l'ouverture de sortie (7) est à peu près égale à la largeur (F) de la roue (3) contiguë.

6. Véhicule selon la revendication 1, caractérisé en ce que l'élément de revêtement (9) est formé par un revêtement de bas de caisse, un tablier frontal ou analogue.

7. Véhicule selon la revendication 6, caractérisé en ce que l'élément de revêtement présente (en observant dans la direction longitudinale du véhicule) dans la zone de l'ouverture de sortie (7) une allure (20) orientée sensiblement horizontalement.

8. Véhicule selon la revendication 1, caractérisé en ce que l'agencement (10) est constitué par un radiateur (16) par lequel passe le premier courant d'air (A).

9. Véhicule selon la revendication 1, caractérisé en ce que l'agencement (10) est constitué par un agrandissement de section droite (18) du dispositif de guidage d'air (4) prévu devant l'ouverture de sortie (7).

10. Véhicule selon la revendication 1, caractérisé en ce que l'ouverture de sortie (7) a une conformation sensiblement triangulaire (en vue de dessus).

**Claims**

1. Motor vehicle having an air guide arranged on the vehicle-body side, for a first air stream (A) which passes through an inlet opening (5) made in front of or behind the wheels (11, 12) into the air guiding apparatus and leaves the latter via an outlet opening (7) provided on an underside (6) of the vehicle, the first air stream (A) being brought together with a second air stream (B) which flows in via a rounded front region and a following smooth-faced vehicle underside and flows through between the vehicle underside and the roadway (8), characterised in that the outlet openings (7) provided on a covering part of the vehicle underside are provided directly in front of and exclusively in the region of the wheels (11, 12), an apparatus (10) for retarding the flow speed of the first air stream (A) being provided within the air guiding apparatus, so that the first air stream (A) has a smaller kinetic energy in the region of the outlet opening than the second air stream (B) passing between the vehicle underside and the roadway.

2. Motor vehicle according to Claim 1, characterised in that the outlet openings (7) are arranged only in front of the two front wheels (11).

3. Motor vehicle according to Claim 1, characterised in that the outlet openings are provided in front of the front wheels (11) and/or the rear wheels (12).

4. Motor vehicle according to Claim 1, characterised in that each outlet opening (7) has a greater width in the vicinity of the wheel than in a region further forward, as seen in the direction of transport (C).

5. Motor vehicle according to Claims 1 to 4, characterised in that the greatest width (E) of the outlet opening (7) is approximately the width (F) of the adjacent wheel (3).

6. Motor vehicle according to Claim 1, characterised in that the covering part (9) is formed from an underside covering, a front apron or the like.

7. Motor vehicle according to Claim 6, characterised in that the covering part – as seen in the longitudinal direction of the vehicle – has an approximately horizontally directed profile (20) in the region of the outlet opening (7).

8. Motor vehicle according to Claim 1, characterised in that the apparatus (10) is formed by a radiator (16) through which the first air stream (A) is guided.

9. Motor vehicle according to Claim 1, characterised in that the apparatus (10) is formed by a cross-sectional widening (18) of the air guiding apparatus (4), provided in front of the outlet opening (7).

10. Motor vehicle according to Claim 1, characterised in that the outlet opening (7) – as seen in plan view – is approximately triangular.

FIG.1

FIG.2

EP 0 213 387 B1

FIG.3

FIG.4

FIG.5

FIG.6